# FASCICULE DE BREVET EUROPEEN

(11) **EP 1 769 140 B1**
(45) Date de publication et mention de la délivrance du brevet: **05.09.2007**
(21) Numéro de dépôt: 05778244.3
(22) Date de dépôt: 21.06.2005
(51) Int. Cl.: F01N 3/021, F02D 41/02, F02D 41/40, F01N 9/00, F01N 3/023, B01D 53/04, F01N 3/08

(54) **SYSTEME D'AIDE A LA REGENERATION DE MOYENS DE DEPOLLUTION DANS UNE LIGNE D'ECHAPPEMENT D'UN MOTEUR**
SYSTEM FÜR DIE UNTERSTÜTZUNG DER REGENERATION EINER ABGASANLAGE
SYSTEM FOR ASSITING REGENERATION OF POLLUTION MANAGEMENT MEANS IN AN ENGINE EXHAUST LINE

(30) Priorité: 23.06.2004 FR 0406862
(43) Date de publication de la demande: 04.04.2007
(73) Titulaire: Peugeot Citroen Automobiles SA, 78140 Vélizy-Villacoublay (FR)
(72) Inventeur: COLIGNON, Christophe, F-92300 LEVALLOIS PERRET (FR)
(74) Mandataire: Pinchon, Odile
(86) Numéro de dépôt international: PCT/FR2005/050471
(87) Numéro de publication internationale: WO 2006/005871

(56) Documents cités:
- EP-A- 1 072 763
- FR-A- 2 771 449
- US-A1- 2003 230 079

## Description

La présente invention concerne un système d'aide à la régénération de moyens de dépollution associés à des moyens formant catalyseur d'oxydation mettant en oeuvre une fonction OSC constituant une réserve d'oxygène, intégrés dans une ligne d'échappement d'un moteur Diesel de véhicule automobile.

Plus particulièrement, l'invention se rapporte à un tel système dans lequel le moteur est associé à des moyens à rampe commune d'alimentation en carburant de cylindres de celui-ci.

Pour assurer la régénération de moyens de dépollution tels qu'un filtre à particules, les suies piégées dans celui-ci sont brûlées grâce à la thermique fournie par le moteur et à l'exotherme réalisé par la conversion des HC et du CO sur les moyens formant catalyseur d'oxydation placés en amont du filtre à particules.

Cette combustion peut être assistée par un élément catalyseur mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Plus les niveaux thermiques dans la ligne d'échappement en entrée du filtre à particules sont élevés, plus la durée de régénération du filtre est courte.

Or, en conditions de roulage critiques, comme par exemple en ville ou dans des embouteillages, les niveaux thermiques atteints à travers les stratégies d'aide à la régénération classiques du filtre à particules, peuvent se révéler insuffisantes pour assurer la régénération correcte du filtre, ce qui peut se traduire par des régénérations très longues et donc très consommatrices de carburant voire incomplètes.

Toute stratégie d'élévation des niveaux thermiques lors de ces roulages critiques, permet alors d'assurer des régénérations complètes, de réduire la surconsommation due à cette régénération du filtre à particules et surtout d'augmenter la marge de sécurité par rapport à la fissuration ou à la casse de ce filtre.

Le but de l'invention est de proposer une telle stratégie.

A cet effet, l'invention a pour objet un système d'aide à la régénération de moyens de dépollution associés à des moyens formant catalyseur d'oxydation mettant en oeuvre une fonction OSC, constituant une réserve d'oxygène et intégrés dans une ligne d'échappement d'un moteur Diesel de véhicule automobile, dans lequel le moteur est associé à des moyens à rampe commune d'alimentation en carburant des cylindres de celui-ci, caractérisé en ce qu'il comporte des moyens de détermination de la fréquence de régénération des moyens de dépollution et de comparaison de celle-ci à des valeurs de seuil prédéterminées, pour piloter le moteur dans un premier mode de fonctionnement de régénération à mélange pauvre pour les fréquences inférieures aux valeurs de seuil ou dans un second mode de fonctionnement de régénération mettant en oeuvre des séquences de fonctionnement du moteur alternant des phases de fonctionnement à mélange riche et à mélange pauvre pour les fréquences supérieures aux valeurs de seuil.

Suivant d'autres caractéristiques :
- les moyens de dépollution comprennent un filtre à particules ;
- le filtre à particules est catalysé ;
- les moyens de dépollution comprennent un piège à NOx ;
- le carburant comporte un additif destiné à se déposer avec les particules auxquelles il est mélangé, sur les moyens de dépollution pour faciliter leur régénération ;
- le carburant comporte un additif formant piège à NOx ;
- les moyens de dépollution sont imprégnés avec une formulation SCR, assurant une fonction d'oxydation CO/HC ;
- le moteur est associé à un turbocompresseur ; et
- la fréquence de régénération des moyens de dépollution est déterminée à partir des cinq dernières tentatives de régénération de ceux-ci.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide selon l'invention ; et
- la Fig.2 illustre le fonctionnement de celui-ci.

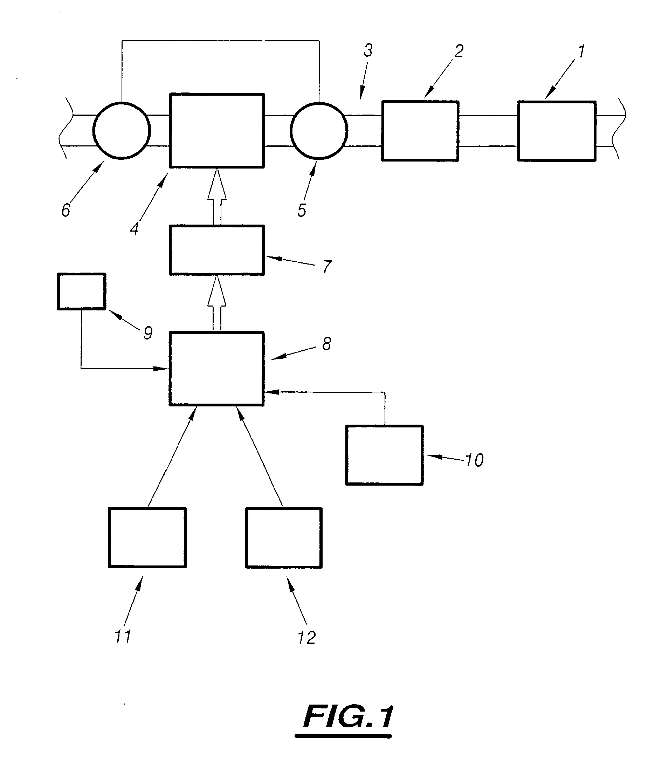

On a en effet illustré sur la figure 1, un système d'aide à la régénération de moyens de dépollution désignés par la référence générale 1, associés à des moyens formant catalyseur d'oxydation, mettant en oeuvre une fonction OSC constituant une réserve d'oxygène, désignés par la référence générale 2, et placés dans une ligne d'échappement 3 d'un moteur de véhicule automobile.

Ce moteur est désigné par la référence générale 4 et peut être associé par exemple à un turbocompresseur dont la portion de turbine 5 est associée à la ligne d'échappement et dont la portion de compresseur 6 est placée en amont du moteur.

De tels moyens formant catalyseur d'oxydation mettant en oeuvre une fonction OSC sont déjà connus dans l'état de la technique.

Le moteur est associé à des moyens à rampe commune d'alimentation en carburant des cylindres de celui-ci désignés par la référence générale 7, dont le fonctionnement est contrôlé par un superviseur 8.

Selon l'invention, ce système comporte également des moyens de détermination de la fréquence de régénération des moyens de dépollution et des moyens de comparaison de celle-ci à des valeurs de seuil prédéterminées pour contrôler le fonctionnement du moteur.

Ces moyens formés par exemple par le superviseur 8, sont alors reliés à des moyens de détermination de cette fréquence, désignés par la référence générale 9, délivrant celle-ci au superviseur 8, de manière à permettre à celui-ci de la comparer à des valeurs de seuil telles que délivrées par des moyens de génération 10 comprenant tous moyens appropriés permettant d'établir ces valeurs de seuil.

La détermination de la fréquence de régénération des moyens de dépollution est en effet importante.

Cette fréquence est déterminée à partir de la distance moyenne parcourue, par exemple entre les cinq dernières régénérations, par calcul en prenant en compte les cinq dernières tentatives de régénération ou d'activations de la demande d'aide à la régénération ayant donné lieu à un bilan de régénération.

Ce calcul est basé sur le kilométrage au début des demandes d'aide à la régénération.

Pour éviter des régénérations trop fréquentes, le kilométrage entre chaque régénération pour les cinq régénérations est enregistré par exemple en mémoire de type E-EPROM.

A partir de ces cinq valeurs, il est alors possible de calculer une moyenne kilométrique de régénération pour déterminer cette fréquence de régénération.

Bien entendu, d'autres modes de réalisation peuvent être envisagés.

Ce nombre ainsi déterminé est ensuite comparé à des valeurs de seuil pour déterminer la stratégie optimale à appliquer.

En fonction du résultat de cette comparaison, le superviseur et les moyens à rampe commune d'alimentation en carburant sont adaptés pour piloter le moteur dans un premier mode de fonctionnement de régénération à mélange pauvre pour les fréquences inférieures aux valeurs de seuil (distance moyenne entre régénérations supérieure à une valeur de seuil), ou dans un second mode de fonctionnement de régénération mettant en oeuvre des séquences de fonctionnement du moteur alternant des phases de fonctionnement à mélange riche et à mélange pauvre, pour les fréquences supérieures aux valeurs de seuil (distance moyenne entre régénérations inférieure à la valeur de seuil). Ces phases de fonctionnement à mélange riche ou pauvre sont établies de façon classique en modifiant des paramètres de contrôle du fonctionnement du moteur.

Ces stratégies sont désignées respectivement par les références générales 11 et 12 sur cette figure.

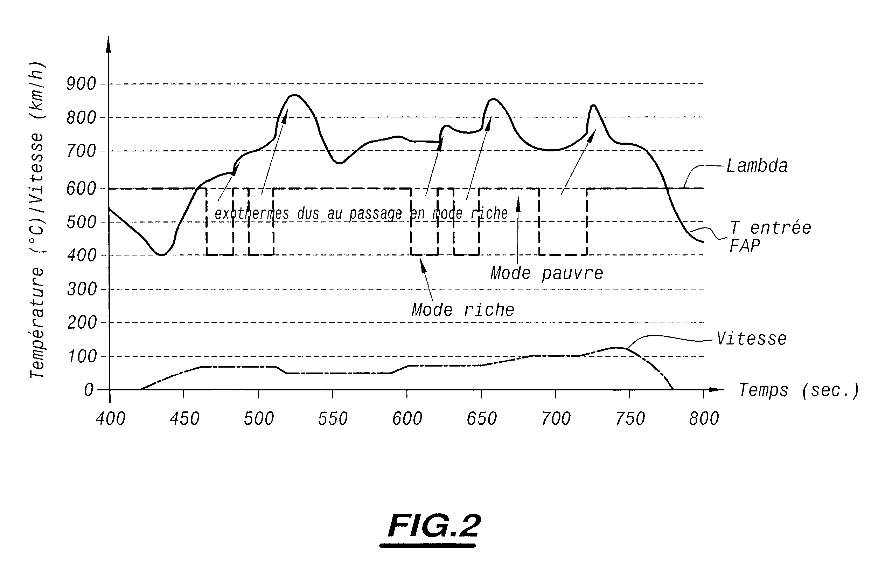

Ceci est illustré sur la figure 2, sur laquelle on voit clairement apparaître les exothermes liés au passage en mode de fonctionnement riche du moteur.

En mode riche, le moteur Diesel émet une grande quantité de CO et d'hydrocarbures imbrûlés dans les gaz d'échappement.

Par ailleurs, la quantité d'oxygène présente dans les gaz est fortement réduite (inférieure à 2-3% et parfois à moins de 1%). Le passage de ces gaz dans les moyens formant catalyseur d'oxydation permet la combustion du CO et des HC par l'oxygène présent dans les gaz.

Afin de pouvoir convertir une plus grosse quantité de CO et des HC, il est souhaitable de mettre à disposition une plus grande quantité d'oxygène.

A cet effet, la présence du composant de type OSC constituant une réserve d'oxygène (Oxygen Storage Capacity), tel que par exemple du cérium qui stocke l'oxygène sous forme de cérine - CeO₂ - ou un oxyde mixte de cérium et de zirconium dans les moyens formant catalyseur d'oxydation, permet de libérer de l'oxygène lors des passages du moteur en mode riche.

La combustion du CO et des HC est une réaction exothermique et permet d'augmenter les niveaux thermiques en sortie des moyens formant catalyseur d'oxydation, c'est-à-dire en fait en entrée du filtre à particules.

En mode de fonctionnement pauvre du moteur (mode RG FAP), on a beaucoup moins de réducteurs (CO, HC) qu'en mode de fonctionnement riche, mais malgré une teneur en oxygène moins élevée, compensée en partie par la présence du composant OSC, l'exotherme produit par les moyens formant catalyseur d'oxydation est plus important en mode riche qu'en mode de régénération pauvre du filtre à particules.

Le passage en mode de fonctionnement riche permet donc de chauffer davantage les gaz d'échappement, ce qui accélère la vitesse de régénération du filtre à particules.

Dans le cas d'un filtre à particules utilisant un additif d'aide à la régénération, l'augmentation des niveaux thermiques permet de réduire le dosage en additif et ainsi d'augmenter la distance parcourue par le véhicule avant le nettoyage du filtre.

On sait en effet qu'un tel additif peut être mélangé au carburant d'alimentation du moteur pour se déposer sur le filtre à particules avec les particules auxquelles il est mélangé, afin d'abaisser la température de combustion des suies piégées dans celui-ci.

De façon classique, cet additif est en effet présent dans les particules après combustion du carburant additivé dans le moteur.

Bien entendu, différents modes de réalisation peuvent être envisagés.

C'est ainsi par exemple que les moyens de dépollution peuvent comporter un filtre à particules, catalysé ou non, un piège à NOx, etc..

Ces moyens de dépollution peuvent également être imprégnés avec une formulation SCR assurant une fonction d'oxydation CO/HC de façon classique.

Par ailleurs, les moyens de dépollution et les moyens formant catalyseur d'oxydation peuvent être intégrés dans un seul et même élément, notamment sur le même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

On conçoit alors comme cela est illustré sur la figure 2, que le pilotage du moteur permet d'augmenter les niveaux thermiques par rapport à un fonctionnement standard, notamment pour les états de charge critiques, ce qui permet ainsi une régénération plus rapide et complète du filtre.

## Revendications

1. Système d'aide à la régénération de moyens de dépollution (1) associés à des moyens formant catalyseur d'oxydation (2) mettant en oeuvre une fonction OSC, constituant une réserve d'oxygène et intégrés dans une ligne d'échappement (3) d'un moteur Diesel (4) de véhicule automobile, dans lequel le moteur est associé à des moyens (7) à rampe commune d'alimentation en carburant des cylindres de celui-ci, **caractérisé en ce qu'**il comporte des moyens (8) de détermination de la fréquence de régénération des moyens de dépollution et de comparaison de celle-ci à des valeurs de seuil prédéterminées (10), pour piloter le moteur (4) dans un premier mode de fonctionnement de régénération à mélange pauvre (11) pour les fréquences inférieures aux valeurs de seuil ou dans un second mode de fonctionnement de régénération mettant en oeuvre des séquences de fonctionnement du moteur alternant des phases de fonctionnement à mélange riche et à mélange pauvre (12) pour les fréquences supérieures aux valeurs de seuil.

2. Système selon la revendication 1, **caractérisé en ce que** les moyens de dépollution comprennent un filtre à particules (1).

3. Système selon la revendication 2, **caractérisé en ce que** le filtre à particules est catalysé.

4. Système selon l'une quelconque des revendications précédentes, **caractérisé en ce que** les moyens de dépollution comprennent un piège à NOx.

5. Système selon l'une quelconque des revendications précédentes, **caractérisé en ce que** le carburant comporte un additif destiné à se déposer avec les particules auxquelles il est mélangé, sur les moyens de dépollution pour faciliter leur régénération.

6. Système selon l'une quelconque des revendications précédentes, **caractérisé en ce que** le carburant comporte un additif formant piège à NOx ;

7. Système selon l'une quelconque des revendications précédentes, **caractérisé en ce que** les moyens de dépollution (1) sont imprégnés avec une formulation SCR, assurant une fonction d'oxydation CO/HC.

8. Système selon l'une quelconque des revendications précédentes, **caractérisé en ce que** le moteur (4) est associé à un turbocompresseur (5,6).

9. Système selon l'une quelconque des revendications précédentes, **caractérisé en ce que** la fréquence de régénération des moyens de dépollution est déterminée à partir des cinq dernières tentatives de régénération de ceux-ci.

## Claims

1. System for aiding the regeneration of pollution control means (1) associated with oxidation catalyst forming means (2) using an OSC function, constituting an oxygen storage capacity and built into an exhaust line (3) of a diesel engine (4) of a motor vehicle, in which the engine is associated with common rail injection means (7) for feeding fuel to the cylinders thereof, **characterized in that** it comprises means (8) for determining the regeneration frequency of the pollution control means and for comparing the said frequency to predefined threshold values (10), to control the engine (4) in a first regeneration operating mode with a lean mixture (11) for frequencies lower than the threshold values, or in a second regeneration operating mode using engine operating sequences alternating operating phases with a rich mixture and with a lean mixture (12) for frequencies higher than the threshold values.

2. System according to Claim 1, **characterized in that** the pollution control means comprise a particulate filter (1) .

3. System according to Claim 2, **characterized in that** the particulate filter is catalysed.

4. System according to any one of the preceding claims, **characterized in that** the pollution control means comprise a NOx trap.

5. System according to any one of the preceding claims, **characterized in that** the fuel comprises an additive to be deposited with the particulates with which it is mixed, on the pollution control means, to facilitate their regeneration.

6. System according to any one of the preceding claims, **characterized in that** the fuel comprises a NOx trap forming additive.

7. System according to any one of the preceding claims, **characterized in that** the pollution control means (1) are impregnated with a SCR formulation, providing a CO/HC oxidation function.

8. System according to any one of the preceding claims, **characterized in that** the engine (4) is associated with a turbocharger (5, 6).

9. System according to any one of the preceding claims, **characterized in that** the regeneration frequency of the pollution control means is determined from the last five attempts at the regeneration thereof.

## Patentansprüche

1. Hilfssystem für das Regenerieren von Reinigungsmitteln (1), die mit Mitteln verbunden sind, die einen Oxidationskatalysator (2) bilden, der eine OSC-Funktion umsetzt, die eine Sauerstoffreserve bildet, und die in eine Auspufflinie (3) eines Dieselmotors (4) eines Kraftfahrzeugs eingebaut sind, bei dem der Motor mit Mitteln (7) mit gemeinsamer Kraftstoffversorgungsrampe der Zylinder des Motors verbunden ist, **dadurch gekennzeichnet, dass** es Mittel (8) zum Bestimmen der Regenerierungshäufigkeit der Reinigungsmittel und Vergleichen dieser Häufigkeit mit vorbestimmten Schwellenwerten (10) aufweist, um den Motor (4) in einer ersten Regenerierungsbetriebsart mit armem Gemisch (11) für die Frequenzen zu steuern, die unter den Schwellenwerten liegen, oder, in einer zweiten Regenerierungsbetriebsart, die Betriebssequenzen des Motors umsetzt, die Betriebsphasen mit reichhaltigem Gemisch und mit armem Gemisch (12) für Frequenzen abwechseln, die größer sind als die Schwellenwerte.

2. System nach Anspruch 1, **dadurch gekennzeichnet, dass** die Reinigungsmittel ein Partikelfilter (1) aufweisen.

3. System nach Anspruch 2, **dadurch gekennzeichnet, dass** das Partikelfilter katalysiert ist.

4. System nach einem der vorhergehenden Ansprüche, **dadurch gekennzeichnet, dass** die Reinigungsmittel eine NOx-Falle aufweisen.

5. System nach einem der vorhergehenden Ansprüche, **dadurch gekennzeichnet, dass** der Kraftstoff ein Zusatzmittel aufweist, das dazu bestimmt ist, sich mit den Partikeln, mit welchen es gemischt ist, auf den Reinigungsmitteln abzulagern, um ihr Reinigen zu erleichtern.

6. System nach einem der vorhergehenden Ansprüche, **dadurch gekennzeichnet, dass** der Kraftstoff ein Zusatzmittel aufweist, das eine NOx-Falle bildet.

7. System nach einem der vorhergehenden Ansprüche, **dadurch gekennzeichnet, dass** die Reinigungsmittel (1) mit einer SCR-Formulierung imprägniert sind, die eine CO/HC-Oxidationswirkung sicherstellt.

8. System nach einem der vorhergehenden Ansprüche, **dadurch gekennzeichnet, dass** der Motor (4) mit einem Turboverdichter (5, 6) verbunden ist.

9. System nach einem der vorhergehenden Ansprüche, **dadurch gekennzeichnet, dass** die Regenerierungsfrequenz der Reinigungsmittel ausgehend von den letzten fünf Regenerierungsversuchen dieser bestimmt wird.
